(19) Europäisches Patentamt
European Patent Office
Office européen des brevets

(11) Veröffentlichungsnummer: **0 424 785 A2**

# (12) EUROPÄISCHE PATENTANMELDUNG

(21) Anmeldenummer: **90119827.5**

(22) Anmeldetag: **16.10.90**

(51) Int. Cl.5: **G11B 7/24**

(30) Priorität: **27.10.89 DE 3935877**

(43) Veröffentlichungstag der Anmeldung:
**02.05.91 Patentblatt 91/18**

(84) Benannte Vertragsstaaten:
**DE FR GB NL**

(71) Anmelder: **BASF Aktiengesellschaft**
**Carl-Bosch-Strasse 38**
**W-6700 Ludwigshafen(DE)**

(72) Erfinder: **Brosius, Sibylle, Dr.**
**Cordovastrasse 29**
**W-6700 Ludwigshafen(DE)**
Erfinder: **Feuerherd, Karl-Heinz, Dr.**
**Kesselgraben 16**
**W-6719 Hettenleidelheim(DE)**
Erfinder: **Harten, Ulrich, Dr.**
**Muehltalstrasse 120**
**W-6900 Heidelberg(DE)**
Erfinder: **Schmitt, Michael, Dr.**
**Freudenbergstrasse 18**
**W-6940 Weinheim(DE)**
Erfinder: **Schomann, Klaus Dieter, Dr.**
**Kopernikusstrasse 47**
**W-6700 Ludwigshafen(DE)**
Erfinder: **Kuppelmaier, Harald, Dr.**
**In den Bannzaeunen 17**
**W-6701 Goennheim(DE)**

## (54) Optisches Aufzeichnungsmedium.

(57) Die Erfindung betrifft ein optisches Aufzeichnungsmedium aus einem Trägermaterial und einer lichtabsorbierenden Schicht, im wesentlichen bestehend aus einer löslichen Mischung eines thermoplastischen Bindemittels und mindestens eines Farbstoffs, wobei das thermoplastische Bindemittel ein Phenol-Aldehyd-Cokondensat mit einem mittleren Polymerisationsgrad größer als 40 ist und weniger als 5 % nichtreagiertes Phenol enthält, und die Schicht eine verbesserte Langzeitstabilität und Dauerlesestabilität aufweist.

EP 0 424 785 A2

## OPTISCHES AUFZEICHNUNGSMEDIUM

Die Erfindung betrifft ein optisches Aufzeichnungsmedium aus einem Trägermaterial und einer lichtabsorbierenden Schicht, im wesentlichen bestehend aus einer löslichen Mischung eines thermoplastischen Bindemittels und mindestens eines Farbstoffs.

Aufzeichnungsmedien bei denen die Speicherung von Informationen durch lokal begrenzte Veränderungen der optischen Eigenschaften des Mediums erfolgt, sind bekannt. Hierbei wird mit Strahlung hoher Energiedichte, z.B. Laserlicht, eine thermisch ausgelöste Zustandsänderung der für die Aufzeichnung vorgesehenen Teile des Aufzeichnungsmaterials erreicht. Diese Veränderungen können ein begrenztes Verdampfen von Material, eine durch Erweichen entstandene Form- oder Oberflächenänderung der für die Aufzeichnung vorgesehenen Schicht, ein Verfärben oder Ausbleichen eines Farbstoffs oder auch ein Wechsel in der physikalischen Struktur des Materials sein, welche eine Änderung der optischen Eigenschaften, z.B. der Absorption oder Extinktion, des für die Aufzeichnung einsetzbaren Materials bewirkt und mit geeigneten Vorrichtungen anschließend wieder detektierbar und als gespeicherte Information verarbeitet werden kann.

Die bekannten optischen Aufzeichnungsmedien bestehen aus einem Trägermaterial aus Glas oder einem geeigneten Kunststoff, z.B. Polycarbonat, auf das dünne Schichten aus anorganischem Material, z.B. Metalle, Halbmetalle oder Legierungen, oder organische Verbindungen, z.B. Farbstoffe, aufgebracht sind. Diese dünnen Schichten werden vorwiegend durch Aufdampfen im Vakuum oder durch Sputtern erzeugt. Dabei muß jedoch die Dicke der Schicht so gewählt werden, daß die Reflexion maximal wird.

Für den Betrieb mit den vorwiegend eingesetzten im nahen Infrarot emittierenden Festkörperinjektionslasern werden als organische Farbstoffe insbesondere Phthalocyaninverbindungen, Methin-Farbstoffe und Quadratsäure-Derivate beschrieben. Azofarbstoff-Komplexe, Anthrachinon-und Triphenylmethanfarbstoffe sowie Pyrylium- und Thiopyryliumsalze sind ebenfalls beschrieben, aber nur eingeschränkt verwendbar, da ihr Absorptionsmaxiumum in den meisten Fällen für die bekannten Halbleiterlaser zu kurzwellig liegt. Dieses Problem entfällt bei den Dithiolen-Komplexen, die in großer Anzahl bekannt sind (z.B. J.A. McCleverty, Progr. Inorg. Chem. 10 , S. 49-221 (1968); G.N. Schrauzer, Acc. Chem. Res. 2 , S. 72-80 (1969)) und deren Anwendung in optischen Aufzeichnungsmedien beschrieben ist.

In der US-PS 4 097 895 wird ein Aufzeichnungsträger beschrieben, der eine Schicht aus einem lichtreflektierenden Material, z.B. Aluminium oder Gold, und eine lichtabsorbierende Schicht, z.B. Fluoreszein, aufweist. Dieser Aufzeichnungsträger kann mit der Strahlung eines Argonlasers beschrieben werden. Die Dicke der lichtabsorbierenden Schicht wird so gewählt, daß die Struktur ein minimales Reflexionsvermögen besitzt. Ein auffallender Lichtstrahl löst die absorbierende Schicht ab, verdampft oder schmilzt sie, so daß ein Loch entsteht, wodurch die lichtreflektierende Schicht freigelegt wird. Nach der Aufnahme ergibt sich für die Wellenlänge des zur Aufnahme benutzten Lichts ein Unterschied zwischen dem minimalen Reflexionsvermögen der lichtabsorbierenden Schicht und dem höheren Reflexionsvermögen der lichtreflektierenden Schicht. Wenn das lichtreflektierende Material als dünne Schicht auf einem nur wenig wärmeleitenden Substrat vorgesehen ist, ist der Energieverlust sowohl durch Reflexion an der dünnen absorbierenden Schicht als auch wegen der geringen Wärmeleitung in der reflektierenden Schicht sehr klein. Die aus dem Lichtstrahl absorbierte Energie wird also auf dem sehr dünnen Film konzentriert.

Generell gilt jedoch, daß das Aufbringen der lichtabsorbierenden Farbstoffschichten durch Verdampfen im Vakuum oder durch Sputtern nicht nur aufwendig, sondern auch schwierig zu reproduzieren ist, da der Farbstoff in einer glatten Schicht mit hoher optischer Qualität in einer für die Empfindlichkeit des Aufzeichnungsmediums ausreichenden Dicke vorliegen muß und solche Farbstoffschichten außerdem mechanisch zu weich sind und auch zu leicht kristallisieren.

Um die Schichtqualität zu verbessern und die Empfindlichkeit zu erhöhen bzw. das Rauschen zu vermindern, wurde auch schon vorgeschlagen, den lichtabsorbierenden Farbstoff enthalten in einem schichtbildenden polymeren Bindemittel aufzubringen. Aus der US-A 4 380 769 sind mit einem Argonlaser beschreibbare Aufzeichnungsträger bekannt, welche als lichtabsorbierende Schicht Azofarbstoffe und/oder Cumarinverbindungen in einem polymeren Bindemittel enthalten. Die Verwendung von Farbstoffen in Verbindung mit Styrololigomeren wird von Kuroiwa in Jap. J. Appl. Phys., Vol. 22, No. 2, 1983, Seiten 340-43 beschrieben. Dort wird auch auf die Schwierigkeiten einer solchen Stoffkombination bei lichtabsorbierenden Schichten bedingt durch eine Phasentrennung und die Inkompatibilität zwischen Farbstoff und Oligomeren hingewiesen. Daneben wird u.a. sowohl in der US-A 3 637 581 als auch in der EP-A 200 833 die Möglichkeit aufgezeigt, durch eine chemische Bindung zwischen dem Chromophor und dem Polymeren die vorgenannten Nachteile zu beheben. Für viele Anwendungsgebiete ist eine solche Maßnahme jedoch ungeeignet, da nur eine geringe Auswahl an Farbstoffen hierfür in Frage kommen, die zudem keine

optimalen lichtabsorbierenden Schichten ergeben.

Zusammenfassend ergibt sich, daß der Einsatz spezieller, wegen ihrer ausgezeichneten Absorptionseigenschaften besonders geeigneter Farbstoffe für die Speicherschichten optischer Aufzeichnungsmedien vor allem Probleme bezüglich des Aufbringens optisch einheitlicher und stabiler Schichten aufwirft. Dabei ist insbesondere die Kristallisation in reinen Farbstoffschichten sowie in schlecht verträglichen Farbstoff/Bindemittel-Schichten zu erwähnen. Auch der Zusatz dieser Farbstoffe zu schichtbildenden Polymeren zeigt durch die nur beschränkte Löslichkeit der Komponenten bzw. durch eine zeitlich bedingte Phasentrennung Schwierigkeiten. Darüber hinaus muß die Stabilität der Schichten, insbesondere auch der eingeschriebenen Information in einem beschleunigten Langzeittest gewährleistet sein. Außerdem muß die Signalamplitude beim Dauerlesen auf derselben Spur hinreichend stabil bleiben.

Es bestand daher die Aufgabe, optische Aufzeichnungsmedien bereitzustellen, deren lichtabsorbierende Schicht aus einer löslichen Mischung eines Farbstoffs und eines Polymeren besteht, wobei das Polymere eine verbesserte Klima- und Dauerlesebeständigkeit der Farbstoff-Polymerschichten bewirkt.

Es wurde nun gefunden, daß optische Aufzeichnungsmedien aus einem Trägermaterial und einer lichtabsorbierenden Schicht, die im wesentlichen aus einer löslichen Mischung eines thermoplastischen Bindemittels und mindestens einem Farbstoff besteht, die Aufgabe lösen, wenn das thermoplastische Bindemittel ein Phenol-Aldehyd-Cokondensat mit einem mittleren Polymerisationsgrad größer 40 ist und der Anteil an nicht reagierter Phenolkomponente zwischen 0,05 und 5 % liegt.

Diese auch als Novolake bezeichneten Harze ergeben besonders vorteilhafte optische Aufzeichnungsmedien, da sie sich durch eine besonders gute Verträglichkeit für die Farbstoffe auszeichnen. Diese lichtabsorbierenden Schichten lassen sich mit dem technisch leicht handhabbaren spin-coating Prozeß hinreichend dick auftragen, so daß ein gutes Signal-Rausch-Verhältnis erreichbar wird. Die angestrebten Schichtdicken im Bereich von 50 bis 200 nm lassen sich durch die Verwendung des speziellen Phenol-Aldehyd-Harzes für die erfindungsgemäßen optischen Aufzeichnungsmedien gut einstellen. Hier zeigt sich eine deutliche Erhöhung in der Pitstabilität sowohl im Klimatest als auch in der Dauerlesestabilität, wenn ein gewisses Molekulargewicht überschritten wird. Die zumindest benötigte Moleküllänge hängt zum einen von den Wechselwirkungen zwischen Farbstoff und Bindemittel ab, zum anderen von dem Anteil des Bindemittels in der Schicht.

Die löslichen Phenol-Aldehyd-Harze, welche für die erfindungsgemäßen optischen Aufzeichnungsträger geeignet sind, werden durch die Umsetzung polyfunktioneller Phenole mit einem Aldehyd erhalten. Die Herstellung erfolgt durch Erhitzen des polyfunktionellen Phenols zusammen mit dem Aldehyd in einem Lösungsmittel in Gegenwart eines Katalysators vorzugsweise unter Inertgas. Anschließend muß durch Wasserdampfdestillation, Auslaugen oder Umfällen das nicht reagierte Phenol hinreichend entfernt werden.

Als polyfunktionelle Phenole lassen sich Phenol selbst sowie Verbindungen der Formel

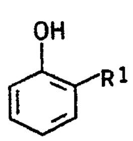
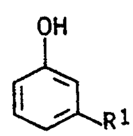
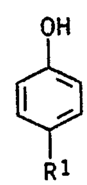
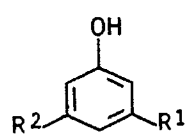

und

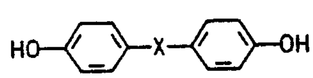

allein oder Gemische daraus einsetzen, wobei $R^1$ und $R^2$ unabhängig voneinander eine Alkylgruppe mit 1 bis 10 Kohlenstoffatomen, eine Phenylgruppe, ein Halogenatom oder eine Hydroxylgruppe bedeuten und X für $-CH_2-$, $-C(CH_3)_2-$ oder -O- steht.

Als Aldehyde können vorzugsweise Formaldehyd oder Formaldehyd abspaltende Verbindungen, aber auch Acetaldehyd, chlorierte Acetaldehyde sowie Acetale und Halbacetale eingesetzt werden.

Das molare Verhältnis der Komponenten beträgt im allgemeinen 0,80 bis 1,2 Aldehyd, bezogen auf polyfunktionelles Phenol in Gegenwart eines sauren Katalysators.

Anstelle eines Aldehydes kann auch eine Bishydroxymethylenverbindung des Typs I oder II mit einem der vorgenannten polyfunktionellen Phenole umgesetzt werden.

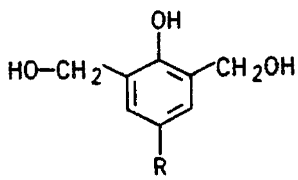

(I)

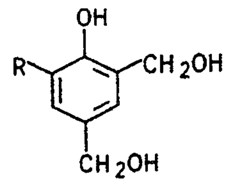

(II)

Hierbei bedeutet R eine Alkylgrupe mit 1 bis 3 Kohlenstoffatomen, Phenyl oder Benzyl.

Das Verhältnis der Komponenten beträgt im allgemeinen 0,8 bis 1,2 Teile, vorzugsweise 0,95 bis 1,05 Teile Phenol, bezogen auf 1 Teil Bishydroxymethylenverbindung in Gegenwart eines sauren Katalysators.

Die Reaktion wird üblicherweise in Gegenwart von Lösungsmitteln, wie Ethern, Alkoholen und Estern durchgeführt, die so ausgewählt werden, daß eine Reaktionstemperatur von 60 bis 120 °C angestrebt werden kann.

Dieses, das erfindungsgemäße optische Aufzeichnungsmedium kennzeichnende Phenol-Aldehyd-Harz ermöglicht die Herstellung einer löslichen Mischung mit einem Farbstoff zur Ausbildung der lichtabsorbierenden Schicht.

Als Farbstoffe für die lichtabsorbierende Schicht kommen die an sich bekannten IR-Farbstoffe in Frage. Es sind vorwiegend die Klassen der Azulenquadratsäurefarbstoffe, wie sie in der DE-A 37 33 173 beschrieben sind, der Cyaninfarbstoffe gemäß den DE-A 35 33 772, 36 08 214, 37 38 911 und 38 10 642, der Phthalocyanin- und Naphthalocyaninfarbstoffe, wie z.B. gemäß den DE-A 34 46 418, 35 20 109, den EP-A 155 780, 186 404, 191 215, 204 876, 213 923, der Dithiolenfarbstoffe gemäß DE-A 35 05 751, der Naphthochinon- und Anthrachinonfarbstoffe, der Chinonfarbstoffe gemäß DE-A 35 07 379, der Azofarbstoffe gemäß US-A 4 702 945, der N,N,N′,N′-Tetratris(p-dialkylaminophenyl)p-phenylendiamine, der Porphyrine und der Azokomplexfarbstoffe.

Im Zusammenhang mit dem erfindungsgemäßen optischen Aufzeichnungsmedium besonders bevorzugte Farbstoffe sind die Azulenquadratsäurefarbstoffe, wie sie u.a. in den DE-A 36 31 843, 37 33 173 und 38 10 642 genannt sind, und die Si-Naphthalocyanine.

Zur Herstellung des erfindungsgemäßen optischen Aufzeichnungsmediums wird eine Farbstofflösung angesetzt, die einen Gehalt von Feststoff zu Lösungsmittel zwischen 0,50 zu 99,5 und 6 zu 94 Teilen, vorzugsweise zwischen 2 zu 98 und 4 zu 96 Teilen aufweist. Nach erfolgtem Auflösen werden Staub und andere nicht gelöste Bestandteile durch übliche Verfahren, z.B. Zentrifugieren oder Filtration, abgetrennt. Die Lösung wird mit einer handelsüblichen Laborbelackungsanlage (z.B. der Firma Convac) auf eine Scheibe aufgetragen, wobei sich die Schichtdicke durch die Zusammensetzung der Lösung und die Rotationsgeschwindigkeit der Scheibe einstellen läßt. Die Schichtdicke läßt sich mit einem α-Step-Gerät (z.B. α-Step-Gerät 200 der Firma Tencor) bestimmen, indem in der Schicht auf einem harten Substrat, vorzugsweise Glas, die Höhe eines Kratzers mit einer feinen Nadel abgetastet wird. Die Homogenität wird unter einem Lichtmikroskop (z.B. bei 500-facher oder 1000-facher Vergrößerung) kontrolliert. Die optischen Eigenschaften der Schicht werden mit einem UV-VIS-Spektrometer (z.B. Lambda 5 der Firma Perkin Elmer) gemessen. Die Schreibleseeigenschaften werden mit einem fokusierten Laserstrahl von 830 nm Wellenlänge mit einer Laserleistung zwischen 0,2 und 10 mW gemessen. Dauerleseversuche werden mit Schichten auf einem Substrat mit Spurrillen, die eine Periode von 1,6 µm aufweisen, durchgeführt. Beschleunigte Langzeitstabilitätstests werden im Klimaschrank bei 80 °C und 80 % relativer Luftfeuchte durchgeführt.

Die verwendeten Novolake werden anhang ihrer inhärenten Viskosität und ihrer Glasübergangstemperatur charakterisiert. Die inhärente Viskosität $\eta_{inh}$ ist wie folgt definiert:

$$\eta_{inh} = \frac{m \cdot \eta_{rel}}{c}$$

(mit der Konzentration c gegen O) (siehe hierzu B. Vollmert: "Grundriß der makromolekularen Chemie", Bd. III, 1985, S. 69ff)

Bestimmt wird $\eta_{rel}$ indem von der Viskosität einer 1 %igen Novolaklösung in Dimethylformamid die Viskosität des reinen Lösungsmittels abgezogen wird. Da $\eta_{inh}$ über die Staudinger-Gleichung mit dem Molekulargewicht M verknüpft ist, läßt sich M daraus bestimmen

$\eta_{inh} = K \cdot M^a$

wobei M das Molekulargewicht und a und K Konstanten sind, welche spezifisch für jedes Polymer-Lösungsmittelsystem sind.

Die auf diese Weise hergestellten erfindungsgemäßen optischen Aufzeichnungsmedien zeichnen sich durch eine hohe Stabilität der lichtabsorbierenden Schicht, eine geringe Empfindlichkeit gegenüber Sauerstoff, eine hohe Reflektivität sowie ein geringes Grundrauschen aus.

Die Erfindung sei anhand der folgenden Beispiele im Vergleich zu Versuchen nach dem Stand der Technik näher erläutert (Mengenangaben in Teilen geben Gewichtsteile an).

Beispiel 1

16,8 g 2,6-Bis(hydroxymethyl)-4-methylphenol und 11,2 g 2-Methoxyphenol wurden in 50 ml Methylglykol in Gegenwart von 6 g Phosphorsäure (85 %) unter Stickstoffatmosphäre eine halbe Stunde bei 70 °C und anschließend 13 Stunden unter Rückfluß gerührt. Nach dem Verdünnen mit Methylglykol wurde der Ansatz in Wasser eingerührt und mit Natriumhydrogencarbonatlösung neutralisiert. Das resultierende Produkt (26,3 g) weist eine inhärente Viskosität von 8,4 und eine Glasübergangstemperatur von 135,4 °C auf.

Beispiel 2

8,4 g 2,6-Bis(hydroxymethyl)-4-methylphenol und 10,3 g Bisphenol A wurden in 25 ml Methylglykol in Gegenwart von 3 g Phosphorsäure (85 %) unter Stickstoffatmosphäre eine halbe Stunde bei 70 °C und anschließend 8 Stunden unter Rückfluß gerührt. Nach dem Verdünnen mit Methylglykol wurde der Ansatz in 1,5 Liter Wasser eingerührt und mit Natriumhydrogencarbonatlösung neutralisiert. Das resultierende Produkt (18,3 g) weist eine inhärente Viskosität von 2,8 und eine Glasübergangstemperatur von 98,1 °C auf.

Vergleichsversuch 3

Es wurde eine Farbstofflösung aus 2,4 Teilen Farbstoff gemäß Beispiel 40 der DE-A 38 16 068 und 1,6 Teilen m-Kresol-Formaldehyd-Cokondensat in 96 Teilen Solvenon PM® angesetzt. Der Novolak besaß ein mittleres Molekulargewicht von 3.500 g/mol und eine Glastemperatur von 83 °C. Staub und ungelöste Teilchen wurden durch Filtration entfernt und die Lösung mit einer Laborbelackungsanlage auf Substrate mit Spurrillen aufgeschleudert. Bei Umdrehungen zwischen 700 und 4.000 Umdrehungen pro Minute wurden Schichten erhalten, die die erforderliche Dicke von 80 nm aufwiesen. Die Schichten waren homogen. Im Dauerlesetest ergab sich eine Signalamplitudenabnahme von mehr als 20 % innerhalb einer Stunde bei 1 mW Laserleistung. Die Schichten wurden dem Klimatest unterworfen.

Beispiel 3

Es wurde eine Farbstofflösung aus 2,4 Teilen Farbstoff gemäß Beispiel 40 der DE-A 38 16 068 und 1,6 Teilen m-Kresol-Formaldehyd-Cokondensat mit einem mittleren Molekulargewicht von 36.000 g/mol und einer Glasübergangstemperatur von 137 °C in 96 Teilen Solvenon PM® angesetzt. Die filtrierte Lösung wurde analog Vergleichsversuch 3 aufgetragen. Dauerlesetests erga ben keine nennenswerte Amplitudenabnahme innerhalb einer Stunde bei 1 mW Laserleistung. Die Schichten wurden dem Klimatest unterworfen und zeigten eine um den Faktor 3,7 erhöhte Ausbleichstabilität gegenüber dem Vergleichsversuch 3.

Vergleichsversuch 4

Es wurde eine Farbstofflösung aus 1,7 Teilen Farbstoff gemäß Beispiel 40 der DE-A 38 16 068 und 1,7 Teilen Phenol-Formaldehyd-Cokondensat in 96,6 Teilen Solvenon IPP® angesetzt. Das Phenol-Formaldehyd-Cokondensat hatte eine inhärente Viskosität von 4,3 und einer Glasübergangstemperatur von 110 °C. Analog Vergleichsversuch 3 wurden dünne Schichten hergestellt. Dauerlesetests ergaben einen schnellen Signalamplitudenabfall um 60% nach 10 Minuten bei 1 mW und einer Lineargeschwindigkeit von 5,5 m/sec. Die Schichten wurden dem Klimatest unterworfen.

Beispiel 4

Es wurde eine Farbstofflösung aus 1,7 Teilen Farbstoff gemäß Beispiel 40 der DE-A 38 16 068 und 1,7 Teilen Phenol-Formaldehyd-Cokondensat in 96,6 Teilen Solvenon IPP® angesetzt. Das Phenol-Formaldehyd-Cokondensat hatte ein mittleres Molekulargewicht von ca. 200.000 g/mol (extrapoliert aus Messungen der inhärenten Viskosität und Lichtdaten) und eine Glasübergangstemperatur von 115 °C. Analog Vergleichsversuch 3 wurden dünne Schichten hergestellt. Dauerlesetests ergaben keinen Amplitudenabnahme während einer Stunde unter den gleichen Bedingungen wie in Vergleichsversuch 3. Die Ausbleichstabilität war gegenüber dem Vergleichsversuch 4 um den Faktor 4,8 erhöht und die Stabilität der eingeschriebenen Information um den Faktor 1,7.

## Ansprüche

1. Optisches Aufzeichnungsmedium aus einem Trägermaterial und einer lichtabsorbierenden Schicht, im wesentlichen bestehend aus einer löslichen Mischung eines thermoplastischen Bindemittels und mindestens einem Farbstoff, dadurch gekennzeichnet, daß das Bindemittel ein lösliches Phenol-Aldehyd-Cokondensat mit einem mittleren Polymerisationsgrad größer als 40 ist und der Gehalt an nichtreagierter Phenolkomponente zwischen 0,05 und 5 % beträgt.

2. Optisches Medium gemäß Anspruch 1, dadurch gekennzeichnet, daß das Bindemittel einen mittleren Polymerisationsgrad größer 60 besitzt und einen Gehalt an nichtreagierter Phenolkomponente zwischen 0,05 und 3 % beträgt.